# EUROPEAN PATENT SPECIFICATION

(11) **EP 3 264 951 B1**
(45) Date of publication and mention of the grant of the patent: **02.01.2019**
(21) Application number: 16708396.3
(22) Date of filing: 04.03.2016
(51) Int. Cl.: A47J 31/60

(54) **A COFFEE MACHINE WHEREIN THE BREWING CHAMBER IS CLEANED**
KAFFEEMASCHINE MIT REINIGUNG DER BRAUKAMMER
MACHINE À CAFÉ DONT LA CHAMBRE D'INFUSION EST NETTOYÉE

(30) Priority: 04.03.2015 TR 201502601
(43) Date of publication of application: 10.01.2018
(73) Proprietor: Arçelik Anonim Sirketi, 34950 Istanbul (TR)
(72) Inventor: BUYUKTOPCU, Cagatay, 34950 Istanbul (TR); AKGUL, Ozkan, 34950 Istanbul (TR); CENGIZ, Osman, 34950 Istanbul (TR)
(86) International application number: PCT/EP2016/054606
(87) International publication number: WO 2016/139324

(56) References cited:
- EP-A1- 0 658 330
- EP-A1- 2 823 737

## Description

The present invention relates to a coffee machine of which the brewing chamber wherein the coffee is brewed is cleaned.

In coffee machines wherein the coffee is prepared in the brewing chamber and poured into the cup or the pot, coffee and foam residues may accumulate in the brewing chamber after the brewing process. For cleaning, the user can remove the brewing chamber from the coffee machine or the brewing chamber can be cleaned by the cleaning mechanisms used in the coffee machines. One of the disadvantages of these mechanisms is that these mechanisms comprise extra elements like water tanks, water conduits, nozzles for the cleaning process and therefore product costs are increased. Moreover, the fact that the cleaning mechanisms increase the dimensions of the coffee machine adversely affects the portability of the coffee machine.

In the state of the art European Patent Application No. EP0658330, a coffee machine is disclosed, wherein cleaning is performed by transferring water from the water container that is used in brewing coffee.

In the state of the art International Patent Application No. WO2011160817, a coffee machine is disclosed, wherein cleaning is performed by dosing the cleaning agent in a time- and product-focused manner.

In the state of the art European Patent Application No.EP2594174, a coffee machine is disclosed, wherein the water line is cleaned.

The aim of the present invention is the realization of a coffee machine wherein the brewing chamber is cleaned effectively.

The coffee machine realized in order to attain the aim of the present invention and explicated in the claims, comprises a first counter that keeps the time elapsed after the last brewing process and a second counter that saves the number of times coffee is brewed after the cleaning process in its memory and a control unit that, depending on the data received from the first counter and the second counter, transfers different amounts of water at different temperatures to the brewing chamber where coffee is brewed and provides the cleaning of the brewing chamber by mixing with water the coffee and foam residues accumulated in the brewing chamber. In the coffee machine of the present invention, when the user desires to perform the cleaning operation, the control unit provides the implementation of the cleaning process by delivering water with different amounts and at temperatures to the brewing chamber and discharging the same therefrom in an adjustable manner depending on the data received from the first counter and the second counter. For example, if a long time has passed since the last brewing operation, the control unit enables the dried coffee residues in the brewing chamber to be effectively cleaned by delivering hot water more than once to the brewing chamber and discharging therefrom.

In an embodiment of the present invention, the control unit performs the cleaning process by delivering water at least once to the brewing chamber and discharging therefrom without heating.

In another embodiment of the present invention, the control unit performs the cleaning process by delivering water more than once, and at least once, discharging the water after being heated.

In another embodiment of the present invention, the control unit performs the cleaning process by delivering and discharging water more than once and discharging the water after being heated more than once.

In another embodiment of the present invention, after the last cleaning process, if coffee is brewed for a number less than a first limit usage number determined by the producer and if less time than a first limit waiting duration determined by the producer has elapsed after the last brewing process, the control unit performs the cleaning operation of mild intensity by delivering a predetermined amount of water to the brewing chamber and discharging therefrom.

In another embodiment of the present invention, after the last cleaning process, if a time has passed between the first limit waiting duration and a second waiting duration longer than the first limit waiting duration determined by the producer and if coffee is brewed for a number less than the first limit usage number or if coffee is brewed for a number between the first limit usage number value and second limit usage number greater than the first limit usage number value and if less time than the first limit waiting duration has elapsed, then the control unit performs the cleaning process of normal intensity by delivering water into the brewing chamber, heating the water and discharging, delivering water into the brewing chamber again and discharging therefrom.

In another embodiment of the present invention, after the last cleaning process, if less time than the first limit waiting duration has elapsed and if coffee is brewed for a number that is between the second limit usage number value and a third limit usage number value greater than the second limit usage number or if a time between the first limit waiting duration and the second limit waiting duration has passed and if coffee is brewed for a number between the first limit usage number and the third limit usage number or if a time between the second limit waiting duration and the third limit waiting duration has passed and if coffee is brewed for a number smaller than the second limit usage number value, then the control unit performs the cleaning process of medium intensity by receiving water into the brewing chamber, discharging after heating and afterwards delivering water into the brewing chamber two more times and discharging therefrom.

In another embodiment of the present invention, after the last cleaning process, if less time than the first limit waiting duration has passed and if coffee is brewed for a number between the second limit usage number and a third limit usage number value greater than the second limit usage number value or if a time between the first limit waiting duration and the second limit waiting duration has passed and if coffee is brewed for a number between the first limit usage number and the third limit usage number or if a time between the second limit waiting duration and the third limit waiting duration has passed and if coffee is brewed for a number smaller than the second limit usage number value, then the control unit performs the cleaning process of medium intensity by twice receiving water into the brewing chamber, discharging after heating and afterwards delivering water into the brewing chamber again and discharging therefrom.

In another embodiment of the present invention, after the last cleaning process, if a time longer than the third limit waiting duration has passed or if coffee is brewed for a number greater than the third limit usage number value or if a time between the second limit waiting duration and the third limit waiting duration has passed and if coffee is brewed for a number between the second limit usage number and the third limit usage number, then the control unit performs the cleaning process of high intensity by delivering water into the brewing chamber three times and discharging therefrom after being heated.

In another embodiment of the present invention, the coffee machine comprises a vibration mechanism that enables the brewing chamber to be vibrated and the control unit enables the brewing chamber to be vibrated by means of the vibration mechanism in the cleaning process. By means of this embodiment, the coffee and foam residues in the brewing chamber are enabled to break off easily from the brewing chamber.

In another embodiment of the present invention, in the cleaning process the amount of water delivered into the brewing chamber in one step is as much as the amount of water delivered into the brewing chamber in the previous brewing process. In this embodiment, the cleaning process is performed by using the optimum amount of water by delivering water into the brewing chamber that is as much as the water used in the previous brewing process.

In another embodiment of the present invention, in the cleaning process, the amount of water delivered into the brewing chamber in one step is as much as the most amount of water delivered into the brewing chamber in the previous brewing processes performed after the last cleaning process. The coffee machine has the feature of making coffee for a different number of times simultaneously and in the cleaning process cleaning is performed by the most amount of water used in the brewing processes after the last cleaning, thus effective cleaning of the brewing chamber is performed efficiently.

In another embodiment of the present invention, the control unit enables the water delivered into the brewing chamber to be heated at least up to 50 degrees centigrade in the embodiments wherein during the cleaning process the water is heated. By this embodiment, energy saving is provided in the cleaning process and efficiency is increased.

In another embodiment of the present invention, the coffee machine comprises a drip tray that is disposed under the brewing chamber and wherein the water used in the cleaning process is collected after discharging.

In the coffee machine of the present invention, the brewing chamber is cleansed of the dried coffee residues by performing a time- and product-oriented cleaning process in different intensities. In the present invention, cost saving is provided in the cleaning process by transferring water from the water tank used in the brewing process without requiring to use a separate cleaning apparatus for cleaning the brewing chamber.

The coffee machine realized to attain the aim of the present invention is illustrated in the attached figures, where:

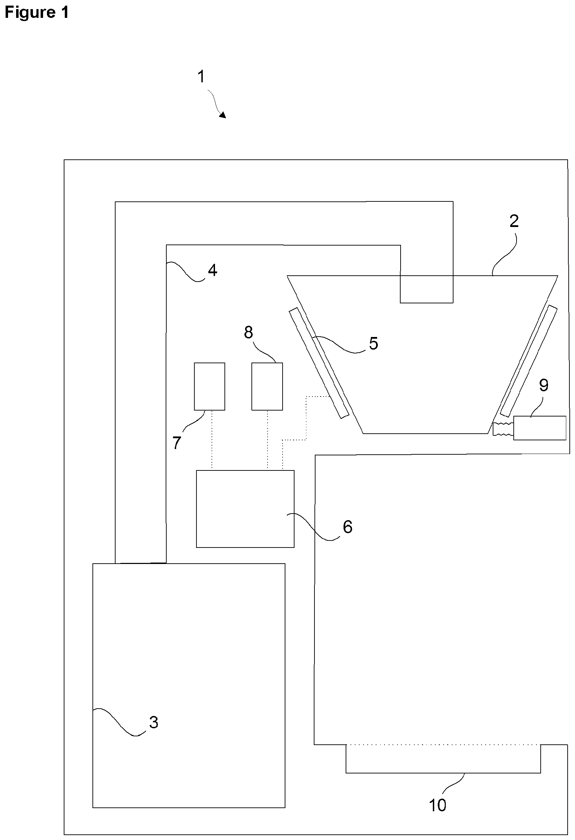

Figure 1 - is the sideways schematic view of a coffee machine.
Figure 2 - is the diagram showing the change in the cleaning intensity with respect to the number of times coffee is brewed and the time passing after the last cleaning.

The elements illustrated in the figures are numbered as follows:
1. Coffee machine
2. Brewing chamber
3. Water tank
4. Water conduit
5. Heater
6. Control unit
7. Time counter
8. Product counter
9. Vibration mechanism
10. Drip tray

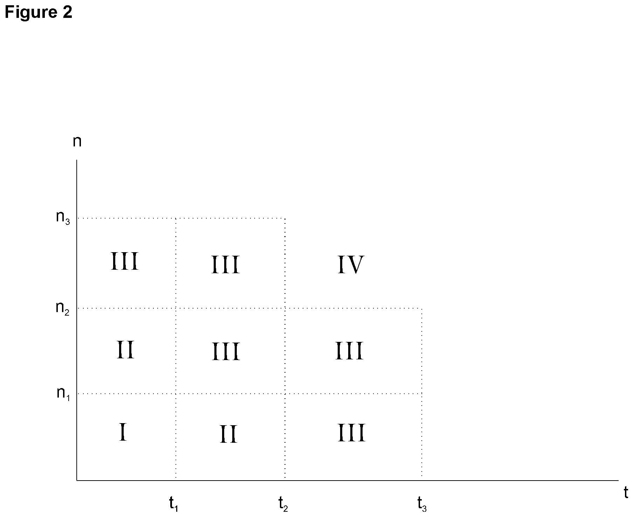

The following symbols are used for explicating the coffee machine (1) of the present invention:
t : time passing after the last brewing process
t1 : a first limit waiting duration value predetermined by the producer and saved in the memory of the control unit (6)
t2 : a second limit waiting duration value predetermined by the producer and saved in the memory of the control unit (6)
t3 : a third limit waiting duration value predetermined by the producer and saved in the memory of the control unit (6)
n : number of coffees brewed after the last cleaning process
n1 : a first limit usage number value predetermined by the producer and saved in the memory of the control unit (6)
n2 : a second limit usage number value predetermined by the producer and saved in the memory of the control unit (6)
n3 : a third limit usage number value predetermined by the producer and saved in the memory of the control unit (6)
   I : the area wherein n<n1 and t<t1 in Figure 2.
   II : the area wherein n1<n<n2 and t<t1 or t1<t<t2 and n<n1 in Figure 2.
   III : the area wherein n2<n<n3 and t<t1 or t1<t<t2 and n1<n<n3 or t2<t<t3 and n<n2 in Figure 2.
   IV : the area wherein n2<n<n3 and t2<t<t3 and n>n3 or t>t3 in Figure 2.

The coffee machine (1) comprises a brewing chamber (2), a water tank (3), a water conduit (4) providing the delivery of water from the water tank (3) to the brewing chamber (2) and a heater (5) that enables the brewing chamber (2) to be heated.

In the coffee machine (1), coffee is delivered to the brewing chamber (2) automatically or by the user filling manually. As the user gives the start brewing command, water is delivered to the brewing chamber (2) from the water tank (3) by a pump (not shown in the figures) and the heater (5) provides the brewing of the coffee by heating the brewing chamber (2). The coffee that is ready in the brewing chamber (2) is poured into a glass or a pot.

The coffee machine (1) of the present invention comprises a first counter (7) that calculates the time passing from the last brewing operation and a second counter (8) that saves the number of coffees brewed after the last cleaning process in its memory and a control unit (6) that enables the brewing chamber (2) to be cleaned by delivering water to the brewing chamber (2) and discharging therefrom and determining how many times water will be delivered to the brewing chamber (2) and the temperature of the delivered water according to the data from the first counter (7) and the second counter (8). When the user desires to perform the cleaning process, the control unit (6) provides the transfer of a predetermined amount of water from the water tank (3) used in the coffee brewing operation into the brewing chamber (2) through the water conduit (4) by means of a pump (not shown in the figures) according to the data received from the second counter (8) and the first counter (7). Transfer of water to the brewing chamber (2) is preferably performed by ejecting as a water jet into the brewing chamber (2). Afterwards, the control unit (6) determines the temperature of the water in the brewing chamber (2), again according to the data received from the first counter (7) and the second counter (8). The water in the brewing chamber (2) is discharged from the brewing chamber (2) after a predetermined time. If a time longer than a duration saved in its memory has passed or coffee is brewed for a number larger than the number saved in its memory after the last cleaning process, The control unit (6) provides the delivery of a large amount of water to the brewing chamber (2) and the heating of the delivered water to a high temperature and the discharging of the same afterwards. Thus, the coffee residues dried up inside the brewing chamber (2) are mixed with water by dissolving and are discharged.

In an embodiment of the present invention, the control unit (6) provides the delivery of water at least once to the brewing chamber (2) and the discharging of the delivered water without heating for cleaning the brewing chamber (2). In this embodiment, if for example coffee is brewed a small number of times or a short time has elapsed after the last cleaning process, the control unit (6) provides the delivery of water to the brewing chamber (2) once and the discharging of the delivered water without heating.

In another embodiment of the present invention, the control unit (6) provides the delivery and the discharging of water more than once to the brewing chamber (2) and the discharging of the delivered water by heating at least once for cleaning the brewing chamber (2). In this embodiment, multiple wash cycles are performed by delivering water more than once to the brewing chamber (2) and discharging therefrom. In at least one of the multiple wash cycles the water is discharged by heating, and the heating operation is preferably performed in the first cycle and the coffee and foam residues in the brewing chamber (2) are enabled to soften.

In another embodiment of the present invention, the control unit (6) provides the performing of the multiple wash cycles by delivering and discharging water more than once to the brewing chamber (2) and in more than one of the said multiple wash cycles provides the heating of the water before discharging for cleaning the brewing chamber (2). By means of this embodiment, preferably when coffee is brewed a high number of times or if a long time has elapsed after the last cleaning process, the coffee residues dried and solidified inside the brewing chamber (2) can be completely softened and discharged with the water delivered into the brewing chamber (2) in more than one multiple wash cycle by heating the water delivered into the brewing chamber (2) .

In another embodiment of the present invention, the control unit (6) provides the performing of the light intensity cleaning (area I in Figure 2) by delivering water once into the brewing chamber (2) and discharging therefrom if the data received from the first counter (7) is smaller than a first limit waiting duration value (t1) predetermined by the producer and saved in the memory of the control unit (6) and if the data received from the second counter (8) is less than a first limit usage number value (n1) predetermined by the producer and saved in the memory of the control unit (6). In this embodiment, after the last cleaning process if coffee is made relatively a fewer number of times and if a long time has not elapsed after the last cleaning process, the control unit (6) provides the performing of the cleaning process by delivering a small amount of water into the brewing chamber (2) and thus using water economically.

In another embodiment of the present invention, the control unit (6) enables the normal intensity cleaning process to be performed (area II in Figure 2) by delivering water twice into the brewing chamber (2), in the first time discharging the water after heating and directly discharging the water the second time if the data received from the first counter (7) is between the first limit waiting duration value (t1) and a second limit waiting duration value (t2) predetermined by the producer and saved in the memory of the control unit (6) and if the data received from the second counter (8) is smaller than the first limit usage number value (n1) or if the data received from the second counter (8) is between the first limit usage number value (n1) and a second limit usage number value (n2) predetermined by the producer and saved in the memory of the control unit (6) and if the data received from the first counter (7) is smaller than the first limit waiting duration value (t1). According to the above explained embodiment, if coffee is brewed a greater number of times or if a longer time has elapsed since the last brewing, the control unit (6) provides the heating of the water delivered into the brewing chamber (2) for cleaning the dried coffee and foam residues, thus softening the residues and the discharging the softened residues from the brewing chamber (2) by the second delivery of water.

In another embodiment of the present invention, the control unit (6) enables the medium intensity cleaning process (area III in Figure 2) to be performed by delivering water three times into the brewing chamber (2), the first time discharging the water after heating and directly discharging the water the other two times if the data received from the first counter (7) is smaller than the first limit waiting duration value (t1) predetermined by the producer and if the data received from the second counter (8) is between the second limit usage number value (n2) and the third limit usage number value (n3) or if the data received from the second counter (8) is between the first limit usage number value (n1) and a third limit usage number value (n3) predetermined by the producer and if the data received from the first counter (7) is between the first limit waiting duration value (t1) and the second limit waiting duration value (t2) or if the data received from the second counter (8) is smaller than the second limit usage number value (n2) that is predetermined by the producer and saved in the memory of the control unit (6) and if the data received from the first counter (7) is between the second limit waiting duration value (t2) and the third limit waiting duration value (t3). With the amount of water used in the cleaning process and the temperature depending on the number of times the coffee is brewed and the elapsed time, the brewing chamber (2) is cleaned with the least amount of water and energy as possible.

In another embodiment of the present invention, the control unit (6) enables the medium intensity cleaning process (area III in Figure 2) to be performed by delivering water three times into the brewing chamber (2), the first two times discharging the water after heating and directly discharging the water the third time if the data received from the first counter (7) is smaller than the first limit waiting duration value (t1) predetermined by the producer and if the data received from the second counter (8) is between the second limit usage number value (n2) and the third limit usage number value (n3) predetermined by the producer or if the data received from the second counter (8) is between the first limit usage number value (n1) and the third limit usage number value (n3) and if the data received from the first counter (7) is between the first limit waiting duration value (t1) and the second limit waiting duration value (t2) or if the data received from the second counter (8) is smaller than the first limit usage number value (n1) predetermined by the producer and if the data received from the first counter (7) is between the second limit waiting duration value (t2) and the third limit waiting duration value (t3). In this embodiment, when the user wants to perform the cleaning process by pressing the cleaning button, water is delivered from the water tank (3) to the brewing chamber (2), and the water in the brewing chamber (2) is heated, providing the softening of the dried and solidified coffee and foam residues and afterwards the water in the brewing chamber (2) is discharged. Right afterwards, water is again taken into the brewing chamber (2) and heated and the residues clinging to the walls of the brewing chamber (2) are removed easily. As the water in the brewing chamber (2) is discharged again, water is delivered to the brewing chamber (2) again and this time water is discharged without being heated.

In another embodiment of the present invention, the control unit (6) enables the high intensity cleaning process (area IV in Figure 2) to be performed by delivering water three times into the brewing chamber (2), and discharging the water after heating three times if the data received from the first counter (7) is greater than the third limit waiting duration value (t3) predetermined by the producer or if the data received from the second counter (8) is greater than the third limit usage number value (n3) or if the data received from the second counter (8) is between the second limit usage number value (n2) and a third limit usage number value (n3) predetermined by the producer and if the data received from the first counter (7) is between the second limit waiting duration value (t2) and the third limit waiting duration value (t3). After the last coffee brewing operation, in the case a longer time with respect to the above embodiments passes or if coffee is brewed a greater number of times, in this embodiment water delivered to the brewing chamber (2) is heated and discharged thereafter since there will be more dried and solidified coffee and foam residues on the walls of the brewing chamber (2). Delivering water three times into the brewing chamber (2) cleanses the brewing chamber (2) to a great extent.

In the above explained embodiments, the limit waiting duration values (t1, t2, t3) used for the time that passes after the last brewing operation are determined such that the first limit waiting duration value (t1) is smaller than the second limit waiting duration value (t2) and the second limit waiting duration (t2) is smaller than the third limit waiting duration (t3). Similarly, the limit usage number values (n1, n2, n3) used for the number of coffees brewed is determined such that the first limit usage number value (n1) is smaller than the second limit usage number value (n2) and the second limit usage number value (n2) is smaller than the third limit usage number value (n3).

In another embodiment of the present invention, the coffee machine (1) comprises a vibration mechanism (9) that vibrates the brewing chamber (2) and that is controlled by the control unit (6), and the control unit (6) enables the brewing chamber (2) to be vibrated after water is delivered to the brewing chamber (2) in the cleaning process. In this embodiment, by vibrating the brewing chamber (2), the coffee and foam residues in the brewing chamber (2) are enabled to more easily break off from the walls of the brewing chamber (2).

In another embodiment of the present invention, the control unit (6) provides as much as the amount of water used in the last brewing operation to be delivered to the brewing chamber (2) in the cleaning process. The coffee machine (1) can brew different number of coffees simultaneously and in this cleaning embodiment by using as much water as used in the last brewing operation, the cleaning process is enabled to be performed without using more water than necessary.

In another embodiment of the present invention, the control unit (6) enables as much water to be delivered to the brewing chamber (2) as the brewing chamber (2) can take in the cleaning process. In this embodiment, it is aimed to clean the foam residues that cling on the upper parts of the brewing chamber (2) during brewing of coffee. By delivering maximum amount of water to the brewing chamber (2), every part of the brewing chamber (2) is cleaned.

In another embodiment of the present invention, in the cleaning process, the control unit (6) enables as much as the most amount of water used in the brewing cycles after the last cleaning process to be delivered to the brewing chamber (2). In this embodiment, after the last cleaning process, when cleaning is desired to be performed after for example 4 cups of coffee is brewed and then a single cup of coffee is brewed, the control unit (6) delivers 4 cups of water into the brewing chamber (2) and thus the residues collected at the upper parts of the brewing chamber (2) while making 4 cups of coffee are cleaned.

In another embodiment of the present invention, the control unit (6) enables the water delivered into the brewing chamber (2) to be heated up to the boiling point in the cleaning process where water is heated. In this embodiment, when cleaning is performed especially after a long time passes after the last brewing, the coffee residues that are completely dried and hardened on the walls of the brewing chamber (2) are enabled to be cleaned effectively.

In another embodiment of the present invention, the control unit (6) provides the heating of the water delivered into the brewing chamber (2) at least up to 50 degrees centigrade in the embodiments wherein during the cleaning process water is heated. In this embodiment, by not heating the water to higher temperatures, energy saving is provided.

In another embodiment of the present invention, when cleaning is desired to be performed and when coffee is not brewed after the last cleaning process, the control unit (6) enables the user to be alerted that the cleaning process is necessary and the brewing chamber (2) is clean. By means of this embodiment, extra water consumption by washing the clean brewing chamber (2) once more is prevented.

In another embodiment of the present invention, the coffee machine (1) comprises a drip tray (10) that is disposed under the brewing chamber (2) and wherein the water discharged from the brewing chamber (2) is collected. The drip tray (10) also enables the coffee that drips from the brewing chamber (2) to be collected when a glass or cup is not present thereunder.

In another embodiment of the present invention, the coffee machine (1) is a coffee machine that can make Turkish coffee. The coffee is transferred by the user or automatically into the brewing chamber (2) and the control unit (6) enables the Turkish coffee to be prepared by means of the heater (5). The prepared Turkish coffee is poured into cups from the brewing chamber (2).

The coffee machine (1) of the present invention provides the cleaning of the brewing chamber (2) by using the water tank (3) and the water conduit (4) used in the coffee brewing process without requiring additional parts to be connected and furthermore by means of the second counter (8) and the first counter (7), the optimum amount and temperature of water is used depending on the amount of coffee and foam residues collected in the brewing chamber (2). By means of the present invention, the brewing chamber (2) is cleaned effectively and efficiently.

## Claims

1. A coffee machine (1) **comprising** a brewing chamber (2), a water tank (3), a water conduit (4) providing the delivery of water from the water tank (3) to the brewing chamber (2) and a heater (5) that enables the brewing chamber (2) to be heated, **characterized by** a first counter (7) that calculates the time passing from the last brewing operation and a second counter (8) that saves the number of coffees brewed after the last cleaning process in its memory and a control unit (6) that enables the brewing chamber (2) to be cleaned by delivering water to the brewing chamber (2) and discharging therefrom and determining how many times water will be delivered to the brewing chamber (2) and the temperature of the delivered water according to the data from the first counter (7) and the second counter (8).

2. A coffee machine (1) as in Claim 1, **characterized by** the control unit (6) that provides the delivery of water at least once to the brewing chamber (2) and the discharging of the water without heating for cleaning the brewing chamber (2).

3. A coffee machine (1) as in Claim 1, **characterized by** the control unit (6) that provides the delivery of water more than once into the brewing chamber (2) and the discharging the same therefrom and before discharging, heating the delivered water at least once for cleaning the brewing chamber (2).

4. A coffee machine (1) as in Claim 1, **characterized by** the control unit (6) that provides the performing of the multiple wash cycles by delivering water more than once to the brewing chamber (2) and discharging the same therefrom and also provides the heating of the water before discharging in more than one time in the said multiple wash cycles, for cleaning the brewing chamber (2).

5. A coffee machine (1) as in Claim 1, **characterized by** the control unit (6) that provides the performing of the light intensity cleaning by delivering water once into the brewing chamber (2) and discharging the same therefrom if the data received from the first counter (7) is smaller than a first limit waiting duration value (t1) predetermined by the producer and the data received from the second counter (8) is smaller than a first limit usage number value (n1) predetermined by the producer.

6. A coffee machine (1) as in Claim 1, **characterized by** the control unit (6) that provides the performing of the normal intensity cleaning process by delivering water twice into the brewing chamber (2), in the first time discharging the water after heating and directly discharging the water the second time if the data received from the first counter (7) is between a first limit waiting duration value (t1) and a second limit waiting duration value (t2) predetermined by the producer and if the data received from the second counter (8) is smaller than the first limit usage number value (n1) or if the data received from the second counter (8) is between the first limit usage number value (n1) and a second limit usage number value (n2) predetermined by the producer and the data received from the first counter (7) is smaller than the first limit waiting duration value (t1).

7. A coffee machine (1) as in Claim 1, **characterized by** the control unit (6) that provides the performing of the medium intensity cleaning process by delivering water three times into the brewing chamber (2), the first time discharging the water after heating and directly discharging the water the other two times if the data received from the first counter (7) is smaller than the first limit waiting duration value (t1) predetermined by the producer and if the data received from the second counter (8) is between the second limit usage number value (n2) and the third limit usage number value (n3) or if the data received from the second counter (8) is between the first limit usage number value (n1) and a third limit usage number value (n3) predetermined by the producer and if the data received from the first counter (7) is between the first limit waiting duration value (t1) and the second limit waiting duration value (t2) or if the data received from the second counter (8) is smaller than a second limit waiting duration (t2) predetermined by the producer and if the data received from the first counter (7) is between the second limit waiting duration value (t2) and the third limit waiting duration value (t3).

8. A coffee machine (1) as in Claim 1, **characterized by** the control unit (6) that provides the performing of the medium intensity cleaning process by delivering water three times into the brewing chamber (2), the first two times discharging the water after heating and directly discharging the water the third time if the data received from the first counter (7) is smaller than the first limit waiting duration value (t1) predetermined by the producer and if the data received from the second counter (8) is between the second limit usage number value (n2) and the third limit usage number value (n3) or if the data received from the second counter (8) is between the first limit usage number value (n1) and a third limit usage number value (n3) predetermined by the producer and if the data received from the first counter (7) is between the first limit waiting duration value (t1) and the second limit waiting duration value (t2) or if the data received from the second counter (8) is smaller than a second limit usage number value (n2) predetermined by the producer and if the data received from the first counter (7) is between the second limit waiting duration value (t2) and the third limit waiting duration value (t3).

9. A coffee machine (1) as in Claim 1, **characterized by** the control unit (6) that provides the performing of the high intensity cleaning process by delivering water three times into the brewing chamber (2), and discharging the water after heating three times if the data received from the first counter (7) is greater than the third limit waiting duration value (t3) predetermined by the producer or if the data received from the second counter (8) is greater than the third limit usage number value (n3) or if the data received from the second counter (8) is between the second limit usage number value (n2) and a third limit usage number value (n3) predetermined by the producer and if the data received from the first counter (7) is between the second limit waiting duration value (t2) and the third limit waiting duration value (t3).

10. A coffee machine (1) as in any one of the above claims, **characterized by** a vibration mechanism (9) that enables the brewing chamber (2) to be vibrated and the control unit (6) that enables the brewing chamber (2) to be vibrated after water is delivered into the brewing chamber (2).

11. A coffee machine (1) as in any one of the Claims 1 to 9, **characterized by** the control unit (6) that provides the delivery of as much as the amount of water used in the last brewing operation to the brewing chamber (2) in the cleaning process.

12. A coffee machine (1) as in any one of the Claims 1 to 9, **characterized by** the control unit (6) that provides the delivery of as much as the most amount of water used in the last brewing cycles after the last cleaning process into the brewing chamber (2) in the cleaning process.

13. A coffee machine (1) as in any one of the Claims 1 to 9, **characterized by** the control unit (6) that provides the heating of the water delivered into the brewing chamber (2) at least up to 50 degrees centigrade in the embodiments wherein during the cleaning process water is heated.

14. A coffee machine (1) as in any one of the above claims, **characterized by** a drip tray (10) that is disposed under the brewing chamber (2) and wherein the water discharged from the brewing chamber (2) is transferred.

15. A coffee machine (1) as in any one of the above claims, that can prepare Turkish coffee.

## Patentansprüche

1. Kaffeemaschine (1) **umfassend** eine Brühkammer (2), einen Wassertank (3), eine Wasserleitung (4), die die Zufuhr von Wasser aus dem Wassertank (3) zur Brühkammer (2) vorsieht, und eine Heizung (5), die es ermöglicht, die Brühkammer (2) zu erhitzen, **gekennzeichnet durch dass,** einen ersten Zähler (7), der die Zeit ab dem letzten Brühvorgang berechnet, und einen zweiten Zähler (8), der die Anzahl der nach dem letzten Reinigungsprozess gebrühten Kaffees in seinem Speicher speichert, und eine Steuereinheit (6), die es ermöglicht, die Brühkammer (2) zu reinigen, indem sie der Brühkammer (2) Wasser zuführt und daraus abgibt und bestimmt, wie oft Wasser in die Brühkammer (2) abgegeben wird und die Temperatur des zugeführten Wassers gemäß den Daten des ersten Zählers (7) und des zweiten Zählers (8) bestimmt.

2. Kaffeemaschine (1) nach Anspruch 1, **gekennzeichnet durch dass,** die Steuereinheit (6), die die Abgabe von Wasser mindestens einmal an die Brühkammer (2) und die Entleerung des Wassers ohne Heizung zur Reinigung der Brühkammer (2) vorsieht.

3. Kaffeemaschine (1) nach Anspruch 1, **gekennzeichnet durch dass,** die Steuereinheit (6), die die Abgabe von Wasser mehr als einmal in die Brühkammer (2) und deren Entleerung sowie vor dem Entleeren bereitstellt, das abgegebene Wasser mindestens einmal zum Reinigen der Brühkammer (2) erhitzt.

4. Kaffeemaschine (1) nach Anspruch 1, **gekennzeichnet durch dass** die Steuereinheit (6), die die Durchführung der mehreren Waschzyklen durch mehrfaches Abgeben von Wasser an die Brühkammer (2) und Entleeren derselben vorsieht und auch die Heizung des Wassers vor dem Entleeren in mehr als einer Zeit in den mehreren Waschzyklen vorsieht, zum Reinigen der Brühkammer (2).

5. Kaffeemaschine (1) nach Anspruch 1, **gekennzeichnet durch dass,** die Steuereinheit (6), die die Durchführung des Reinigungsprozesses mit Lichtintensität durch einmaliges Abgeben von Wasser in die Brühkammer (2) und Entleeren derselben vorsieht, wenn die vom ersten Zähler (7) empfangenen Daten kleiner sind als ein vom Hersteller vorgegebener erster Grenzwertwartezeitwert (t1) und die vom zweiten Zähler (8) empfangenen Daten kleiner sind als ein vom Hersteller vorgegebener erster Grenzwertnutzungszahlswert (n1).

6. Kaffeemaschine (1) nach Anspruch 1, **gekennzeichnet durch dass,** die Steuereinheit (6), die die Durchführung des Reinigungsprozesses mit normaler Intensität durch zweimaliges Abgeben von Wasser in die Brühkammer (2) vorsieht, in dem ersten Zeitpunkt, in dem das Wasser nach dem Heizen entleert und das Wasser zum zweiten Mal direkt entleert wird, wenn die vom ersten Zähler (7) empfangenen Daten zwischen einem ersten Grenzwertwartezeitwert (t1) und einem vom Hersteller vorgegebenen zweiten Grenzwertwartezeitwert (t2) liegen und wenn die vom zweiten Zähler (8) empfangenen Daten kleiner als der erste Grenzwertnutzungszahlswert (n1) oder wenn die vom zweiten Zähler (8) empfangenen Daten zwischen dem ersten Grenzwertnutzungszahlswert (n1) und einem vom Hersteller vorgegebenen zweiten Grenzwertnutzungszahlswert (n2) liegen und die vom ersten Zähler (7) empfangenen Daten kleiner als der erste Grenzwertwartezeitwert (t1) sind.

7. Kaffeemaschine (1) nach Anspruch 1, **gekennzeichnet durch dass** die Steuereinheit (6), die die Durchführung des Reinigungsprozesses mittlerer Intensität durch dreimaliges Abgeben von Wasser in die Brühkammer (2) vorsieht, das erste Mal, das Wasser nach dem Heizen zu entleeren und das Wasser direkt zu entleeren, und das andere zweimal, wenn die vom ersten Zähler (7) empfangenen Daten kleiner sind als der vom Hersteller vorgegebene erste Grenzwertwartezeitwert (t1) und wenn die vom zweiten Zähler (8) empfangenen Daten zwischen der zweiten Grenzwertnutzungszahlswert (n2) und der dritten Grenzwertnutzungszahlswert (n3) liegen oder wenn die vom zweiten Zähler (8) empfangenen Daten zwischen dem ersten Grenzwertnutzungszahlswert (n1) und einem vom Hersteller vorgegebenen dritten Grenzwertnutzungszahlswert (n3) liegen und wenn die von dem ersten Zähler (7) empfangenen Daten zwischen dem ersten Grenzwertwartezeitwert (t1) und dem zweiten Grenzwertwartezeitwert (t2) liegen oder wenn die von dem zweiten Zähler (8) empfangenen Daten kleiner als eine vom Hersteller vorgegebene zweite Grenzwertwzeitwert (t2) sind und wenn die von dem ersten Zähler (7) empfangenen Daten zwischen dem zweiten Grenzwertwartezeitwert (t2) und dem dritten Grenzwertwartezeitwert (t3) liegen.

8. Kaffeemaschine (1) nach Anspruch 1, **gekennzeichnet durch dass,** die Steuereinheit (6), die die Durchführung des Reinigungsprozesses mittlerer Intensität durch dreimaliges Abgeben von Wasser in die Brühkammer (2) vorsieht, die ersten beiden Male das Wasser nach dem Heizen abführen und das Wasser zum dritten Mal direkt abgeben, wenn die vom ersten Zähler (7) empfangenen Daten kleiner sind als der vom Hersteller vorgegebene erste Grenzwertwartezeitwert (t1) und wenn die von dem zweiten Zähler (8) empfangenen Daten zwischen dem zweiten Grenzwertnutzungszahlswert (n2) und dem dritten Grenzwertnutzungszahlswert (n3) liegen oder wenn die von dem zweiten Zähler (8) empfangenen Daten zwischen dem ersten Grenzwertnutzungszahlswert (n1) und einem vom Hersteller vorgegebenen dritten Grenzwertnutzungszahlswert (n3) liegen und wenn die vom ersten Zähler (7) empfangenen Daten zwischen dem ersten Grenzwertwartezeitwert (t1) und dem zweiten Grenzwertwartezeitwert (t2) liegen oder wenn die vom zweiten Zähler (8) empfangenen Daten kleiner als ein vom Hersteller vorgegebener zweiter Grenzwertnutzungszahlswert (n2) sind und wenn die vom ersten Zähler (7) empfangenen Daten zwischen dem zweiten Grenzwertwartezeitwert (t2) und dem dritten Grenzwertwartezeitwert (t3) liegen.

9. Kaffeemaschine (1) nach Anspruch 1, **gekennzeichnet durch dass** die Steuereinheit (6), die die Durchführung des Reinigungsprozesses mit hoher Intensität durch dreimaliges Abgeben von Wasser in die Brühkammer (2) vorsieht, und Entleeren des Wassers nach dem Heizen dreimal, wenn die vom ersten Zähler (7) empfangenen Daten größer als der vom Hersteller vorgegebene dritte Grenzwertwartezeitwert (t3) sind oder wenn die vom zweiten Zähler (8) empfangenen Daten größer als der dritte Grenzwertnutzungszahlswert (n3) sind oder wenn die Daten die von dem zweiten Zähler (8) empfangen werden, zwischen dem zweiten Grenzwertnutzungszahlswert (n2) und einem vom Hersteller vorgegebenen dritten Grenzwertnutzungszahlswert (n3) liegt und wenn die vom ersten Zähler (7) empfangenen Daten zwischen dem zweiten Grenzwertwartezeitwert (t2) und dem dritten Grenzwertwartezeitwert (t3) liegen.

10. Kaffeemaschine (1) nach einem der vorstehenden Ansprüche, **gekennzeichnet durch dass,** einen Vibrationsmechanismus (9), der das Vibrieren der Brühkammer (2) und die Steuereinheit (6) ermöglicht, die das Vibrieren der Brühkammer (2) ermöglicht, nachdem Wasser in die Brühkammer (2) abgegeben wurde.

11. Kaffeemaschine (1) nach einem der Ansprüche 1 bis 9, **gekennzeichnet durch dass,** die Steuereinheit (6), die die Abgabe von so viel wie der beim letzten Brühvorgang verbrauchten Wassermenge an die Brühkammer (2) während des Reinigungsprozesses vorsieht.

12. Kaffeemaschine (1) nach einem der Ansprüche 1 bis 9, **gekennzeichnet durch dass,** die Steuereinheit (6), die die Abgabe der in den letzten Brühzyklen nach dem letzten Reinigungsprozess verbrauchten Wassermenge in die Brühkammer (2) im Reinigungsprozess vorsieht.

13. Kaffeemaschine (1) nach einem der Ansprüche 1 bis 9, **gekennzeichnet durch dass,** die Steuereinheit (6), die das Heizen des in die Brühkammer (2) zugeführten Wassers mindestens bis zu 50 Grad Celsius in den Ausführungsformen vorsieht, wobei während des Reinigungsprozesses Wasser erhitzt wird.

14. Kaffeemaschine (1) nach einem der vorstehenden Ansprüche, **gekennzeichnet durch dass** eine Auffangwanne (10), die unter der Brühkammer (2) angeordnet ist und bei der das aus der Brühkammer (2) entlasste Wasser übertragen wird.

15. Kaffeemaschine (1) nach einem der vorstehenden Ansprüche, die türkischen Kaffee zubereiten.

## Revendications

1. Machine à café (1) **comprenant** une chambre d'infusion (2), un réservoir d'eau (3), un conduit d'eau (4) fournissant l'alimentation en eau du réservoir d'eau (3) à la chambre d'infusion (2) et un réchauffeur (5) qui permet de chauffer la chambre d'infusion (2), **caractérisée par** un premier compteur (7) qui calcule le temps passant depuis la dernière opération d'infusion et un deuxième compteur (8) qui enregistre dans sa mémoire le nombre de cafés infusés après le dernier processus de nettoyage et une unité de commande (6) qui permet de nettoyer la chambre d'infusion (2) en délivrant de l'eau à la chambre d'infusion (2) et en la déchargeant et déterminant combien de fois l'eau sera livrée à la chambre d'infusion (2) et la température de l'eau fournie en fonction des données du premier compteur (7) et du deuxième compteur (8).

2. Machine à café (1) selon la revendication 1, **caractérisée par** l'unité de commande (6) qui fournit l'alimentation en eau au moins une fois à la chambre d'infusion (2) et l'évacuation de l'eau sans chauffage pour nettoyer la chambre d'infusion (2).

3. Machine à café (1) selon la revendication 1, **caractérisée par** l'unité de commande (6) qui fournit l'alimentation en eau plus d'une fois dans la chambre d'infusion (2) et l'évacuation de celle-ci et avant l'évacuation, chauffer l'eau fournie au moins une fois pour nettoyer la chambre d'infusion (2).

4. Machine à café (1) selon la revendication 1, **caractérisée par** l'unité de commande (6) qui assure l'exécution des cycles de lavage multiples en délivrant de l'eau plus d'une fois à la chambre d'infusion (2) et en la déchargeant de celle-ci et qui assure également le chauffage de l'eau avant décharge en plus d'une fois dans lesdits cycles de lavage multiples, pour nettoyer la chambre d'infusion (2).

5. Machine à café (1) selon la revendication 1, **caractérisée par** l'unité de commande (6) qui assure l'exécution du nettoyage à intensité lumineuse en délivrant de l'eau une fois dans la chambre d'infusion (2) et en la déchargeant de celle-ci si les données reçues du premier compteur (7) sont inférieures à une première valeur limite de temps d'attente (t1) prédéterminée par le producteur et les données reçues du deuxième compteur (8) sont inférieures à une première valeur limite d'utilisation prédéterminée (n1) par le producteur.

6. Machine à café (1) selon la revendication 1, **caractérisée par** l'unité de commande (6) qui assure l'exécution du processus de nettoyage d'intensité normale en délivrant de l'eau deux fois dans la chambre d'infusion (2), la première fois en déchargeant l'eau après chauffage et en déchargeant directement l'eau la deuxième fois si les données reçues du premier compteur (7) sont comprises entre une première valeur limite (t1) et une deuxième valeur limite (t2) prédéterminée par le fabricant et si les données reçues du deuxième compteur (8) sont inférieures à la première valeur du numéro d'utilisation limite (n1) ou si les données reçues du deuxième compteur (8) se situent entre la première valeur du numéro d'utilisation limite (n1) et une deuxième valeur du numéro d'utilisation limite (n2) prédéterminée par le producteur et les données reçues du premier compteur (7) sont inférieures à la première valeur du temps d'attente limite (t1).

7. Machine à café (1) selon la revendication 1, **caractérisée par** l'unité de commande (6) qui assure l'exécution du processus de nettoyage d'intensité moyenne en délivrant trois fois de l'eau dans la chambre d'infusion (2), la première fois où l'eau est rejetée après avoir été chauffée et les deux autres fois après avoir été directement rejetée si les données reçues du premier compteur (7) sont inférieures à la première valeur limite de temps d'attente (t1) prédéterminée par le producteur et si les données reçues du deuxième compteur (8) sont comprises entre la deuxième valeur limite d'utilisation (n2) et la troisième valeur limite d'utilisation (n3) ou si les données reçues du deuxième compteur (8) se situent entre la première valeur du numéro d'utilisation limite (n1) et une troisième valeur du numéro d'utilisation limite (n3) prédéterminée par le producteur et si les données reçues du premier compteur (7) se situent entre la première valeur du temps d'attente limite (t1) et la deuxième valeur du temps d'attente limite (t2) ou si les données reçues du deuxième compteur (8) sont inférieures à une deuxième durée d'attente limite (t2) prédéterminée par le producteur et si les données reçues du premier compteur (7) sont comprises entre la deuxième valeur de durée d'attente limite (t2) et la troisième valeur de durée d'attente limite (t3).

8. Machine à café (1) selon la revendication 1, **caractérisée par** l'unité de commande (6) qui assure l'exécution du processus de nettoyage d'intensité moyenne en délivrant trois fois de l'eau dans la chambre d'infusion (2), les deux premières fois où l'eau est rejetée après avoir été chauffée et la troisième fois après avoir été directement rejetée si les données reçues du premier compteur (7) sont inférieures à la première valeur limite de temps d'attente (t1) prédéterminée par le producteur et si les données reçues du deuxième compteur (8) sont comprises entre la deuxième valeur limite d'utilisation (n2) et la troisième valeur limite d'utilisation (n3) ou si les données reçues du deuxième compteur (8) se situent entre la première valeur du numéro d'utilisation limite (n1) et une troisième valeur du numéro d'utilisation limite (n3) prédéterminée par le producteur et si les données reçues du premier compteur (7) se situent entre la première valeur du temps d'attente limite (t1) et la deuxième valeur limite de la durée d'attente (t2) ou si les données reçues du deuxième compteur (8) sont inférieures à une deuxième valeur de nombre d'utilisation limite (n2) prédéterminée par le producteur et si les données reçues du premier compteur (7) sont comprises entre la deuxième valeur de durée d'attente limite (t2) et la troisième valeur de durée d'attente limite (t3).

9. Machine à café (1) selon la revendication 1, **caractérisée par** l'unité de commande (6) qui assure l'exécution du processus de nettoyage à haute intensité en délivrant de l'eau trois fois dans la chambre d'infusion (2), et décharger l'eau après le chauffage trois fois si les données reçues du premier compteur (7) sont supérieures à la troisième valeur limite de temps d'attente (t3) prédéterminée par le producteur ou si les données reçues du deuxième compteur (8) sont supérieures à la troisième valeur limite d'utilisation (n3) ou si les données reçues du deuxième compteur (8) se situent entre la deuxième valeur limite d'utilisation (n2) et une troisième valeur limite d'utilisation (n3) prédéterminée par le producteur et si les données reçues du premier compteur (7) se situent entre la deuxième valeur limite d'attente (t2) et la troisième valeur limite (t3).

10. Machine à café (1) selon l'une quelconque des revendications précédentes, **caractérisée par** un mécanisme de vibration (9) qui permet de faire vibrer la chambre d'infusion (2) et l'unité de commande (6) qui permet de faire vibrer la chambre d'infusion (2) après que de l'eau a été amenée dans la chambre d'infusion (2).

11. Machine à café (1) selon l'une quelconque des revendications 1 à 9, **caractérisée par** l'unité de commande (6) qui fournit à la chambre d'infusion (2) une quantité d'eau égale à la quantité d'eau utilisée lors de la dernière opération d'infusion dans le processus de nettoyage.

12. Machine à café (1) selon l'une quelconque des revendications 1 à 9, **caractérisée par** l'unité de commande (6) qui assure la distribution d'autant d'eau que la plus grande quantité d'eau utilisée dans les derniers cycles d'infusion après le dernier processus de nettoyage dans la chambre d'infusion (2) pendant le processus de nettoyage.

13. Machine à café (1) selon l'une quelconque des revendications 1 à 9, **caractérisée par** l'unité de commande (6) qui assure le chauffage de l'eau fournie dans la chambre d'infusion (2) jusqu'à au moins 50 degrés centigrades dans les configurations dans lesquelles l'eau est chauffée pendant le processus de nettoyage.

14. Machine à café (1) selon l'une quelconque des revendications précédentes, **caractérisée par** un plateau d'égouttage (10) qui est disposé sous la chambre d'infusion (2) et dans lequel l'eau évacuée de la chambre d'infusion (2) est transférée.

15. Machine à café (1) comme dans l'une quelconque des revendications ci-dessus, qui peut préparer du café turc.
